# EUROPEAN PATENT APPLICATION

(11) **EP 0 919 910 A1**
(43) Date of publication of application: **02.06.1999**
(21) Application number: 98309404.6
(22) Date of filing: 17.11.1998
(51) Int. Cl.: G06F 7/544

(54) **Multiple data path processor with a three-input adder**

(30) Priority: 25.11.1997 US 978468
(71) Applicant: LUCENT TECHNOLOGIES INC., Murray Hill, New Jersey 07974-0636 (US)
(72) Inventor: Alidina, Mazhar M., Allentown, Pennsylvania 18103 (US); Simanapalli, Sivanand, Allentown, Pennsylvania 18103 (US); Tate, Larry R., South Barrington, Illinois 60010 (US); Thierbach, Mark Ernest, Allentown, Pennsylvania 18104 (US)
(74) Representative: Watts, Christopher Malcolm Kelway, Dr.

(57) **Abstract**

There is disclosed a processor including at least two multiply-accumulate data paths (24, 26; 28, 30). Each multiply-accumulate data path has at least one multiplier (24 or 28) and at least one adder (26 or 30). At least one of the adders (30) in at least one of the multiply-accumulate data paths is a three-input adder.

## Description

### Technical Field

This invention relates generally to multiple data path processors, and particularly to a multiple data path processor having a three-input adder.

### Background of the Invention

Multiple data path processors, such as multiple multiply-accumulate digital signal processors, are known. Such digital signal processors are used for executing algorithms to process digitized representations of signals using numerical operations such as, for example, in communications and video applications. Many multiple multiply-accumulate processors are designed to accumulate products using multiple, two-input arithmetic logic units. When filtering a signal such as in a finite impulse response filter algorithm, two-input arithmetic logic units limit the ability to maximize processor performance by requiring that the programmer structure the computations around the hardware limitations.

What is needed is a multiply-accumulate data path that provides a more efficient technique for signal processing, such as calculating individual output samples of a finite impulse response filter.

### Summary of the Invention

In accordance with the invention, a processor includes at least two multiply-accumulate data paths. Each multiply-accumulate data path has at least one multiplier and at least one adder. At least one of the adders in at least one of the multiply-accumulate data paths is a three-input adder.

### Brief Description of the Drawing

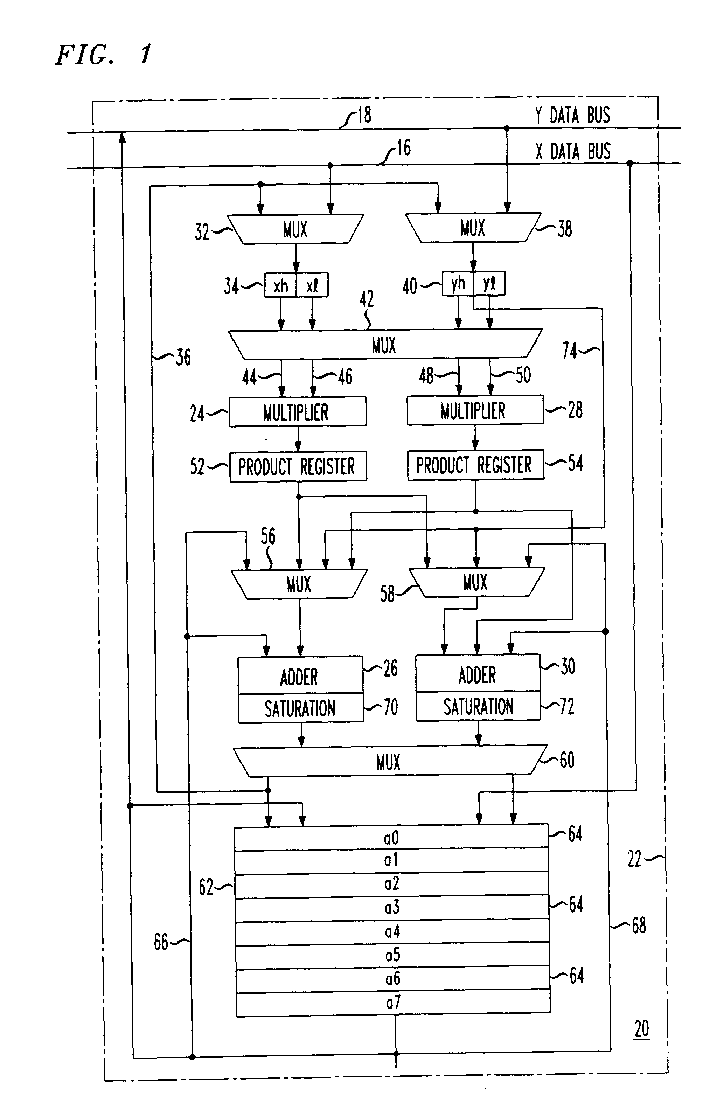

Figure 1 is a schematic diagram of a portion of a data arithmetic unit in accordance with the present invention.

### Detailed Description

Figure 1 shows a schematic diagram of a portion of a data arithmetic unit (DAU) 20 which may be part of an integrated circuit. The integrated circuit may be part of a transceiver in a communications system or a portion of a communications system such as a mobile digital cellular telephone. DAU 20 is a portion of a processor 22 such as a microcontroller, microprocessor, or digital signal processor. DAU 20 includes a multiplexer 32 to select an input to a first input register 34 from a plurality of inputs. Input register 34 may be segmented into high and low portions represented as xh and xl. The high and low portions typically each contain n bits, where n is an arbitrary number. In a preferred embodiment, n is sixteen. First input register 34 is a 2n-bit register having high and low portions. An n-bit word can be multiplexed into each of the high portion, xh and low portion, xl. The expression 2n-bit is intended to be twice a word length n bits plus appropriate guard bits. DAU 20 includes at least two multiply-accumulate paths. Multipler 24 and adder 26 provide a first multiply-accumulate path; multiplier 28 and adder 30 provide a second multiply-accumulate path. Multiplexer 32 may have inputs coupled to a first databus 16, also designated the X databus, and a feedback path 36 from the output of adders 26 and 30. Multiplexer 38 selects an input from the plurality of inputs as an input to second input register 40, also designated the y register. Second input register 40 may be segmented into high and low portions represented as yh and yl. The high and low portions typically each contain n bits. Similarly, second input register 40 is a 2n-bit register having high and low portions. Multiplexer 38 may be coupled to a second databus 18, also designated the Y databus, and feedback path 36 from the output of adders 26 and 30.

The bits from xh and xl portions of first input register 34 as well as the bits from yh and yl portions of second input register 40 are independently available to each multiplier 24 and 28 by way of crossover multiplexer 42. Crossover multiplexer 42 provides two inputs to each multiplier 24 and 28. Inputs 44 and 46 are provided to multiplier 24; inputs 48 and 50 are provided to multiplier 28. An n-bit word can be multiplexed into each of the high half and low half of each of registers 34 and 40. The output from either the high half or low half of either first input register 34 or second input register 40 can provide any of the inputs 44, 46, 48 or 50 to multipliers 24 and 28 through crossover multiplexer 42. Each multiplier 24 and 28 multiplies the inputs it receives and provides a product output. The product output from multiplier 24 is stored in a first product register 52, and is provided as an input to both multiplexers 56 and 58. Similarly, the product output from multiplier 28 is stored in a second product register 54, and is provided as an input to both multiplexer 56 and multiplexer 58. Multiplexers 56 and 58 also have available as an input the contents of second input register 40.

Accumulator file 62 is comprised of a plurality of registers 64. Registers 64 comprising accumulator file 62 are also 2n-bit registers accessible by high and low portions. The output of accumulator file 62 is coupled by line 66 as an input to multiplexer 56 and adder 26, and by line 68 as an input to multiplexer 58 and adder 30.

The output of multiplexer 56 provides an input to adder 26. The sum output from adder 26 is passed through saturation block 70 to limit the output to an extremum value during overflow, and coupled as an input to multiplexers 32, 38 and 60. Similarly, the output of multiplexer 58 provides an input to adder 30. The sum output from adder 30 is passed through saturation block 72 to limit the output to an extremum value during overflow, and is coupled as an input to multiplexers 32, 38 and 60. Multiplexer 60 can provide the output of either adder 26 or 30 to any of registers 64 in accumulator file 62.

The select inputs to the various multiplexers are set by an instruction decoder in a control section of the processor architecture, not shown, to choose the appropriate input as an output.

In a preferred embodiment, adder 30 is a three-input adder, and adder 26 has at least two inputs. Each of adders 26 and 30 provide a sum output that is a combination of the adder inputs. In addition, either or both adders may be split adders. Split adders can perform two additions or two subtractions such as by combining the high order bits of two operands and the low order bits of two operands. While adder 26 has been characterized as an adder, adder 26 can be an arithmetic logic unit capable of performing logical operations as well as addition and subtraction operations.

Adder 26 may receive one of its inputs from the output of either multiplier 24 or multiplier 28 by way of product register 52 and 54 and multiplexer 56. Similarly, adder 30 may receive one or two inputs from the outputs of multiplier 24 and multiplier 28 by way of product register 52 and 54, and in the case of the output from multiplier 24, multiplexer 58. In this manner, the output of multiplier 24 in the first data path can be provided as an input to either adder 26 in the first data path or adder 30 in the second data path, or both. Similarly, the output from multiplier 28 in the second data path can be provided as an input to adder 30 in the second data path or adder 26 in the first data path, or both.

Two inputs to adder 26 may be provided as outputs from registers 64 of accumulator file 62 by way of line 66. While one input to adder 26 may be provided directly from the output of register file 62, another input may be provided through multiplexer 56. Similarly, two inputs to adder 30 may be provided as outputs from registers 64 of accumulator file 62 by way of 68. While one input to adder may be coupled directly to the output of register 64 of accumulator file 62, a second input to adder 30 is coupled through multiplexer 58 by way of line 68.

Having at least one 3-input adder in a data path provides the opportunity for the user to compute two taps of a finite impulse response filter, or one tap of two independent filters. Furthermore, providing at least one of the two adders as a split adder provides additional flexibility that can further enhance performance. With at least one of the adders being a split adder, it is possible to perform up to three addition or subtraction operations in a single clock cycle. With both adders being split adders, it is possible to perform up to four addition or subtraction operations in a single clock cycle.

## Claims

1. A processor circuit including
a data arithmetic unit (20) having at least two multiply-accumulate data paths (24, 26; 28, 30), each multiply-accumulate data path having at least one multiplier (24 or 28) and at least one adder (26 or 30), the processor characterized in that at least one of the adders (30) being a three-input adder.

2. A processor as recited in claim 1, further characterized in that in each data path, an output from the multiplier (24; 28) is adapted to be coupled as an input to the adder.

3. A processor as recited in claim 1, further characterized by a register file (62) for receiving an output from the at least one adder in each of the at least two data paths.

4. A processor as recited in claim 1 further characterized in that at least one of the adders (26 or 30) is a split adder.

5. A processor as recited in claim 1, further characterized in that an adder (26; 30) in each data path is a split adder.

6. A processor as recited in claim 1, wherein a first data path includes a first multiplier (24) adapted to receive first and second inputs, the first multiplier adapted to provide an output that is a product of the first (44) and second (46) inputs, and a first adder (26) having at least two inputs, a first input of said at least two inputs adapted to be coupled to the output of the first multiplier, the first adder providing a first sum output that is a combination of the first adder inputs, and a second data path includes a second multiplier (28) adapted to receive third (48) and fourth (50) inputs, the second multiplier (28) adapted to provide an output that is a product of the third and fourth inputs and a second adder, the second adder providing a second sum output that is a combination of the second adder inputs the processor characterized by the second adder (30) being adapted to receive three inputs, a first input to the second adder adapted to be coupled to the output of the second multiplier.

7. A processor as recited in claim 6, further characterized by a register file (62) adapted to be coupled to receive the first sum output from the first adder (26) and the second sum output from the second adder (30).

8. A processor as recited in claim 7, further characterized by an input (44 or 46) to the first adder (24) is adapted to be coupled to receive outputs from the register file (62).

9. A processor as recited in claim 7, further characterized by a second input to the second adder is adapted to be coupled (66) to receive outputs from the register file (62).

10. A processor as recited in claim 6, further characterized by the output from the first multiplier is adapted to be coupled as an input to both the first adder (26) and the second adder (30).

11. A processor as recited in claim 6, further characterized by the output from the second multiplier (28) is adapted to be coupled as an input to both the first adder (26) and the second adder.

12. A processor, as recited in claim 10, further characterized by the output from the second multiplier (28) is adapted to be coupled as an input to both the first adder (26) and the second adder (30).

13. A processor as recited in claim 6, further characterized by an input to one of said first and second multipliers (24 or 28) is adapted to be coupled as an input to the first adder (26).

14. A processor as recited in claim 6, further characterized by an input to one of said first and second multipliers (24 or 28) is adapted to be coupled as an input to the second adder (30).

15. A processor as recited in claim 6, further characterized by an input to one of said first and second multipliers (24 or 28) is adapted to be coupled as an input to both the first (26) and second adders (28).

16. A processor as recited in claim 6, further characterized by the first sum output is adapted to be coupled as one of the first, second, third and fourth inputs.

17. A processor as recited in claim 6, further characterized by the second sum output is adapted to be coupled as one of the first, second, third and fourth inputs.

18. A processor as recited in claim 6, further characterized by the first sum output is adapted to be coupled as one of the first, second, third and fourth inputs, and the second sum output is adapted to be coupled as another one of the first, second, third and fourth inputs.

19. A processor as recited in claim 6, further characterized by the first sum output is adapted to be coupled as two of the at least two inputs to the first adder (26).

20. A processor as recited in claim 6, further characterized by the second sum output is adapted to be coupled as two of the inputs to the second adder (30).

21. A processor as recited in claim 6, further characterized by the first sum output is adapted to be coupled as two of the inputs to the second adder (30).

22. A processor as recited in claim 6, further charactered by the second sum output is adapted to be coupled as two of the at least two inputs to the first adder (26).

23. A processor as recited in claim 6, further characterized by the processor is fabricated in an integrated circuit.

24. A processor as recited in claim 6, further characterized by the processor is a digital signal processor.

25. An integrated circuit including first and second multipliers, first and second adders, and first, second and third multiplexers, the integrated circuit characterized by the first multiplexer (42) adapted to receive first, second, third and fourth inputs, the first multiplexer adapted to provide the first, second, third and fourth inputs as outputs, the first multiplier (24) adapted to receive as inputs two of the first, second, third and fourth inputs, the first multiplier (24) adapted to provide an output that is a product of the two first multiplier inputs, the second multiplier (28) adapted to receive as inputs two of the first, second, third and fourth inputs, the first multiplier (28) adapted to provide an output that is a product of the two second multiplier inputs, the second multiplexer (56) adapted to receive as inputs an output from the first multiplier (24) and an output from the second multiplier (28), the second multiplexer adapted to provide one of the inputs as an output, the third multiplexer (58) adapted to receive as one of its inputs an output from the first multiplier the third multiplexer adapted to provide one of the inputs as an output, the first adder (26) having at least two inputs, a first input of said at least two inputs adapted to be coupled to the output of the second multiplexer (56), the first adder providing a first sum output that is a combination of the at least two inputs, and the second adder (30) adapted to receive at least three inputs, a first input adapted to be coupled to the output of the third multiplexer, the second adder providing a second sum that is a combination of the at least three inputs.

26. An integrated circuit as recited in claim 25, characterized in that at least one of said first, second, third and fourth inputs to the first multiplexer (42) is also provided as an input to the second multiplexer (56).

27. An integrated circuit as recited in claim 25, characterized in that at least one of said first, second, third and fourth inputs to the first multiplexer (42) is also provided as an input to the third multiplexer (58).

28. An integrated circuit as recited in claim 25, characterized in that at least one of said first, second, third and fourth inputs to the first multiplexer (42) is also provided as an input to the both the second and third multiplexers (56, 58).

29. An integrated circuit as recited in claim 25, characterized in that an accumulator file (62) of registers (64), the accumulator file (62) adapted to receive and store outputs from the first (26) and second (30) adders, the accumulator file (62) adapted to provide outputs.

30. An integrated circuit as recited in claim 29, characterized in that an output from the register file (62) provides an input to the first adder (26).

31. An integrated circuit as recited in claim 29, characterized in that an output from the register file (62) provides an input to the second multiplexer (56).

32. An integrated circuit as recited in claim 29, characterized in that an output from the register file (62) provides an input to the second adder (30).

33. An integrated circuit as recited in claim 29, characterized in that an output from the register file provides an input to the third multiplexer.

34. An integrated circuit as recited in claim 29, further characterized in that a fourth multiplexer (60), the fourth multiplexer adapted to receive as inputs the outputs from the first (26) and second (30) adders, the fourth multiplexer (60) adapted to provide as an output the outputs from the first (26) and second (30) adders to the registers (64) in the accumulator file (62).

35. An integrated circuit as recited in claim 34, characterized in that at least one of said first, second, third and fourth inputs to the first multiplexer (42) is an output from the fourth multiplexer (60).
